# EUROPÄISCHE PATENTSCHRIFT

(11) **EP 2 217 515 B1**
(45) Veröffentlichungstag und Bekanntmachung des Hinweises auf die Patenterteilung: **26.10.2011**
(21) Anmeldenummer: 08855802.8
(22) Anmeldetag: 27.11.2008
(51) Int. Cl.: B65G 65/00

(54) **PALETTIERVORRICHTUNG UND VERFAHREN ZUM BE- UND/ODER ENTLADEN VON PALETTEN**
PALLETIZING DEVICE AND METHOD FOR LOADING AND/OR UNLOADING PALLETS
DISPOSITIF DE PALETTISATION, PROCÉDÉ DE CHARGEMENT ET/OU DE DÉCHARGEMENT DE PALETTES

(30) Priorität: 04.12.2007 DE 102007059925; 08.01.2008 DE 102008004280
(43) Veröffentlichungstag der Anmeldung: 18.08.2010
(73) Patentinhaber: Faude, Dieter, 71116 Gärtringen (DE)
(72) Erfinder: Faude, Dieter, 71116 Gärtringen (DE)
(74) Vertreter: Müller, Thomas
(86) Internationale Anmeldenummer: PCT/DE2008/002029
(87) Internationale Veröffentlichungsnummer: WO 2009/071072

(56) Entgegenhaltungen:
- DE-B3-102006 003 859
- DE-U1- 20 005 219
- DE-U1- 29 812 106
- FR-A1- 2 647 763
- US-A- 4 275 986
- US-A1- 2006 182 545

## Beschreibung

### Stand der Technik

Die Erfindung geht aus von einer Palettiervorrichtung (Palettiersystem, Palettierer), nach der Gattung des Anspruchs 1, von einem Verfahren zum Be- und/oder Entladen von Paletten, Werkstücken, Trays, Blister, Kleinlasttransportbehältern odgl. mittels einer Palettiervorrichtung, nach der Gattung des Anspruchs 8, und von Verfahren zum Bearbeiten, Montieren odgl. von Werkstücken, nach der Gattung des Anspruchs 13.

In der industriellen Produktion kommen Palettiervorrichtungen zum Einsatz, die Teile, wie z.B. Rohlinge, Zwischenprodukte oder Endprodukte in Behälter, wie z.B. Paletten, Euro-Paletten, Trays, Blister, Kleinlasttransportbehältern odgl. einlegen oder diese Teile aus diesen Behältern entnehmen. In der Regel erfolgt sowohl die Zuführung der Behälter zu der Palettiervorrichtung als auch die Abführung der Behälter stapelweise.

Zum Stand der Technik gehören Be- und Entladesysteme, bei denen der oberste Behälter eines Stapels mittels einer Greifeinrichtung erfasst, anschließend in die Be- bzw. Entladeposition verbracht und auf dem Abführungsstapel abgelegt werden. Durch US 2006/0182545 A1 ist zudem eine Palettierungsvorrichtung bekannt, bei der mittels eines Greifers ein Produkt von einem Band abgehoben wird, um es auf einer Palette, die sich auf einem stehenden Band in einer Bearbeitungsposition befindet, zu stapeln. Nachteilig ist bei diesem Stand der Technik, dass durch dieses absätzige Verfahren Wartezeiten entstehen, die den Produktionsablauf negativ beeinflussen.

Um diese Wartezeiten zu verkürzen wird in der Gebrauchsmusterschrift DE 298 12 106 U 1 eine Palettierungsvorrichtung gemäß dem Oberbegriff des Anspruchs 1 vorgeschlagen, die für den zuzuführenden Behälterstapel mit einem ersten Palettenlift und für den abzuführenden Behälterstapel mit einem zweiten Palettenlift ausgestattet ist. Mittels einer Vereinzelungsvorrichtung in Form eines waagerecht bewegbaren Rahmens wird der oberste Behälter des zugeführten Behälterstapels von dem Stapel abgehoben und horizontal zu einer zwischen den Palettenliften angeordneten Bearbeitungsstation, bei der der Behälter be- bzw. entladen wird, verbracht und auf einem Bearbeitungstisch abgelegt. Während der Behälter mittels eines Portal-Systems be- bzw. entladen wird, senkt sich der Rahmen, um den nächsten Behälter des zugeführten Behälterstapels anzuheben. Wenn dieser Behälter die Höhe des auf dem Arbeitstisch befindlichen Behälters erreicht hat und, wenn der Be- bzw. Entladevorgang des auf dem Arbeitstisch befindlichen Behälters beendet ist, wird der zuletzt angehobene Behälter durch den Rahmen horizontal zum Arbeitstisch befördert und gleichzeitig der bis dahin auf dem Arbeitstisch befindliche Behälter über den abzuführenden Behälterstapel gebracht. Durch Absenkung des Rahmens erfolgt zum einen ein Absetzen des zuletzt gegriffenen Behälters auf dem Arbeitstisch und zum anderen ein Absetzen des von dem Arbeitstisch beförderten Behälters auf den abzuführenden Behälterstapels. Anschließend wird der Rahmen waagerecht in eine Position gebracht, dass der nun oberste Behälter des zugeführten Behälterstapels von dem Stapel abgehoben werden kann. Wenn dieser Behälter die Höhe des nun auf dem Arbeitstisch befindlichen Behälters erreicht hat und, wenn der Be- bzw. Entladevorgang des nun auf dem Arbeitstisch befindlichen Behälters beendet ist, wird der zuletzt angehobene Behälter durch den Rahmen horizontal zum Arbeitstisch befördert und gleichzeitig der bis dahin auf dem Arbeitstisch befindliche Behälter über den abzuführenden Behälterstapel gebracht. Zwar ist durch dieses System die Wartezeit auf den Zeitraum beschränkt, den ein oberster Behälter des zugeführten Behälterstapels benötigt, um, nachdem er abgehoben wurde horizontal zu der zwischen den Palettenliften angeordneten Bearbeitungsstation zu gelangen, doch kann auch schon diese taktbedingte Wartezeit den Produktionsablauf empfindlich stören.

DE 298 12 106 U1 beschreibt auch das Verfahren von Oberbegriff den Anspruchs 8.

Um auf den Rahmen verzichten zu können, wird in der Gebrauchsmusterschrift DE 200 05 219 U1 eine Palettierungsvorrichtung vorgeschlagen, bei der zwischen den Palettenliften in ihrer vertikalen oberen Lage ein beidseitig verlaufender, endloser Nockenzahnriemen zum Transport der Paletten angeordnet ist. Dadurch findet eine Vereinzelung des obersten Behälters statt, so dass dieser unterhalb des Achsportals befördert werden kann. Allerdings ist auch in dieser Ausführung eine Taktung vorhanden, so dass Verzögerungen in den Produktionsablauf einkalkuliert werden müssen.

### Die Erfindung und ihre Vorteile

Die erfindungsgemäße Palettiervorrichtung (Palettiersystem, Palettierer), mit den kennzeichnenden Merkmalen des Anspruchs 1, das erfindungsgemäße Verfahren zum Be- und/oder Entladen von Paletten, Werkstücken, Trays, Blister, Kleinlasttransportbehältern odgl. mittels einer Palettiervorrichtung, mit den kennzeichnenden Merkmalen des Anspruchs 8, und das erfindungsgemäße Verfahren zum Bearbeiten, Montieren odgl. von Werkstücken, mit den kennzeichnenden Merkmalen des Anspruchs 13, haben demgegenüber den Vorteil, dass auch schwere Teile mit hoher Geschwindigkeit und hoher Präzision gehandelt werden können sowie Prozesse, Handling und Materialfluss in einer Maschine abgebildet ist, wobei sie kostengünstig und einfach zu programmieren sind und durch die Verwendung einer mit einer Parallel-Kinematik, Robotik, einem Linearschlitten odgl. ausgestatteten Be- bzw. Entladeeinheit, mit der auch ein fliegendes Auf- bzw. Ablegen eines Werkstücks, Bauteils odgl. ermöglicht wird, einen absolut kontinuierlichen Verfahrensablauf gewährleisten. Die erfindungsgemäße Palettiervorrichtung, deren Einrichtung zum Zu- und/oder Abführen von Paletten, Werkstücken, Trays, Blister, Kleinlasttransportbehältern odgl. mindestens eine Beschickungsvorrichtung aufweist, wobei die Beschickungsvorrichtung eine Zuführung und/oder eine Abführung aufweist, ist hierbei als Einzel-, Doppelpalettierer oder Mehrfachpalettierer ausgestaltet und kann neben der Funktion des Be- und Entladens auch als Station für Prozesse, wie z.B. prüfen, montieren (Montagestation), sortieren, dichten, befüllen, bearbeiten (Bearbeitungsstation) und/odgl. in den Produktionsprozess integriert werden.

Nach einer vorteilhaften Ausgestaltung der erfindungsgemäßen Palettierungsvorrichtung ist die Be- und/oder Entladeeinheit ein Tripod, Hexapod oder eine Neos-Kinematik.

Nach einer diesbezüglichen vorteilhaften Ausgestaltung der erfindungsgemäßen Palettierungsvorrichtung ist die Zuführung und/oder Abführung eine Rollenbahn, ein Transportwagen, ein Bodenroller odgl..

Nach einer zusätzlichen vorteilhaften Ausgestaltung der erfindungsgemäßen Palettierungsvorrichtung ist die Palettiervorrichtung ein Einfach-, Doppel- oder Mehrfachpalettierer.

Nach einer zusätzlichen vorteilhaften Ausgestaltung der erfindungsgemäßen Palettierungsvorrichtung weist die Palettiervorrichtung eine zum Auf- bzw. Abstapeln genutzte Vereinzelungseinrichtung auf.

Nach einer zusätzlichen vorteilhaften Ausgestaltung der erfindungsgemäßen Palettierungsvorrichtung ist jeder Zuführung ein erster Palettenlift und jeder Abführung ein zweiter Palettenlift zugeordnet.

Nach einer diesbezüglichen vorteilhaften Ausgestaltung der erfindungsgemäßen Palettierungsvorrichtung sind der erste und der zweite Palettenlift voneinander beabstandet angeordnet, wobei der Abstand mindestens eine Palettenbreite beträgt.

Nach einer vorteilhaften Ausgestaltung des erfindungsgemäßen Verfahrens zum Be- und/oder Entladen von Paletten, Werkstücken, Trays, Blister, Kleinlasttransportbehältern odgl. mittels einer Palettiervorrichtung, bei der eine Vereinzelungseinrichtung die zugeführte Paletten, das zugeführte Werkstück, den zugeführten Tray, den zugeführten Blister, den zugeführten Kleinlasttransportbehältern odgl. von der Zuführung zur Abführung transportiert, ermöglicht die Parallel-Kinematik, Robotik, der Linearschlitten odgl. ein kontinuierliches Be- und/oder Entladen.

Nach einer zusätzlichen vorteilhaften Ausgestaltung des erfindungsgemäßen Verfahrens ist die Vereinzelungseinrichtung nahezu kontinuierlich in Bewegung.

Nach einer zusätzlichen vorteilhaften Ausgestaltung des erfindungsgemäßen Verfahrens ermöglicht die Parallel-Kinematik, Robotik, der Linearschlitten odgl. ein kontinuierliches und/oder fliegendes Be- und/oder Entladen.

Nach einer zusätzlichen vorteilhaften Ausgestaltung des erfindungsgemäßen Verfahrens wird als Palettiervorrichtung eine Palettiervorrichtung nach einem der Ansprüche 1 bis 7 eingesetzt.

Nach einer vorteilhaften Ausgestaltung des erfindungsgemäßen Verfahrens zum Bearbeiten, Montieren odgl. von Werkstücken wird als Palettiervorrichtung eine eine Parallel-Kinematik, Robotik, einen Linearschlitten odgl. aufweisende Palettiervorrichtung nach einem der Ansprüche 1 bis 7 eingesetzt.

Weitere Vorteile und vorteilhafte Ausgestaltungen der Erfindung sind der nachfolgenden Beschreibung, der Zeichnung und den Ansprüchen entnehmbar.

### Zeichnung

Ausführungsbeispiele des Gegenstandes der Erfindung sind in der Zeichnung dargestellt und im Folgenden näher beschrieben.

Es zeigen:
Fig. 1 eine Aufsicht einer als Einzelpalettierer ausgebildeten erfindungsgemäßen Palettiervorrichtung;
Fig. 2 eine weitere Aufsicht einer als Einzelpalettierer ausgebildeten erfindungsgemäßen Palettiervorrichtung;
Fig. 3 verschiedene Ansichten einer als Doppelpalettierer ausgebildeten erfindungsgemäßen Palettiervorrichtung;
Fig. 4 bis Fig. 12 einen schematischen Ablauf einer Vereinzelungsvorrichtung einer erfindungsgemäßen Palettiervorrichtung gemäß Fig. 2;
Fig. 13 ein beispielhaftes, schematisches Ablaufschema von in einen Produktionsablauf integrierten, als Doppelpalettierer ausgebildeten erfindungsgemäßen Palettiervorrichtungen;
Fig. 14 eine Detailansicht der Fig. 13;
Fig. 15 eine andere Detailansicht der Fig. 13 und
Fig. 16 ein beispielhaftes, weiteres schematisches Ablaufschema von in einen Produktionsablauf integrierten, als Doppelpalettierer ausgebildeten erfindungsgemäßen Palettiervorrichtungen.

### Beschreibung des Ausführungsbeispiels

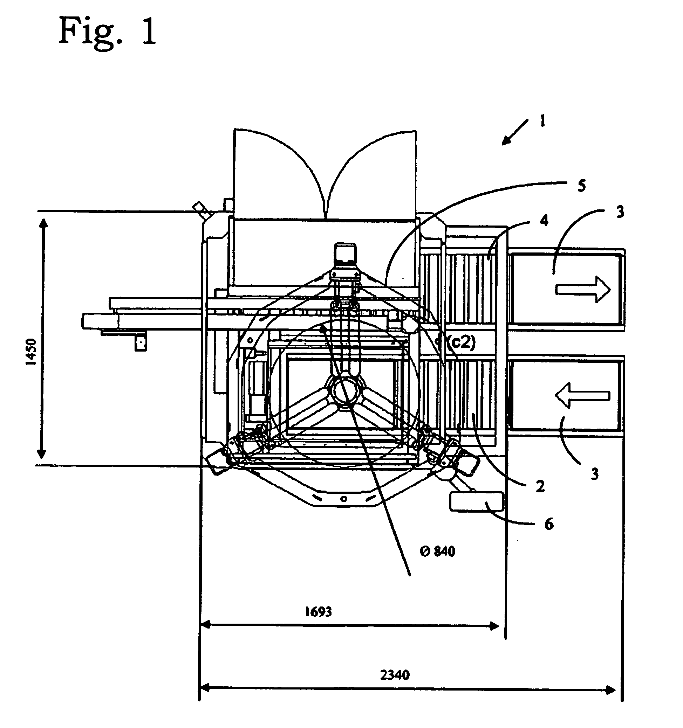

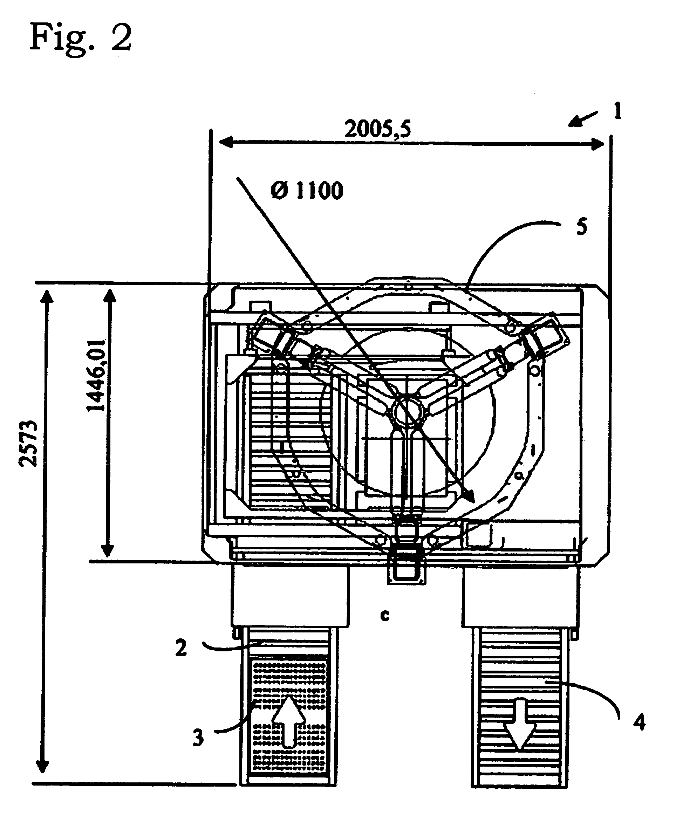

Die Fig. 1 und Fig. 2 zeigen eine Aufsicht einer als Einzelpalettierer ausgebildeten erfindungsgemäßen Palettiervorrichtung 1, wobei die angegebenen Maße nur beispielhaft zu sehen sind. Über einer Zuführung 2 wird eine Palette oder ein Palettenstapel 3 der Palettiervorrichtung 1 zugeführt und über eine Abführung 4 wird eine Palette oder ein Palettenstapel 3 von der Palettiervorrichtung 1 abgeführt. Bevorzugt sind die Zuführung 2 und die Abführung 4 mit einem Lift versehen. Über der Zuführung 2 und der Abführung 4 ist eine Be- und/oder Entladeeinheit 5, die eine Parallel-Kinematik, Robotik, einen Linearschlitten odgl. aufweist, angeordnet. Bevorzugt ist die Be- und/oder Entladeeinheit 5 als Tripod ausgebildet und damit nach allen dreidimensionalen Richtungen verstellbar, wobei die Verstellung mittels eines elektrischen Steuergerätes 6 erfolgt, in welchem ein Rechner ein jeweils eingegebenes Programm für die Roboterfunktion umsetzt. Zwischen der Zuführung 2 und der Abführung 4 befindet sich eine Vereinzelungseinrichtung, die die Palette 3 vom Stapel löst und durch die eine Beförderung zur Abführungsseite bewerkstelligt wird. Während dieser Beförderung, die bei dem in Fig. 2 dargestellten Ausführungsbeispiel über eine längere Wegstrecke erfolgt, da der Abstand zwischen der Zuführung 2 und der Abführung 4 mindestens eine Palettenbreite beträgt, wird kontinuierlich bzw. fliegend durch die Be- und/oder Entladeeinheit 5 die vereinzelte Palette 3 beladen bzw. entladen, wodurch keinerlei Wartezeiten zu verzeichnen sind.

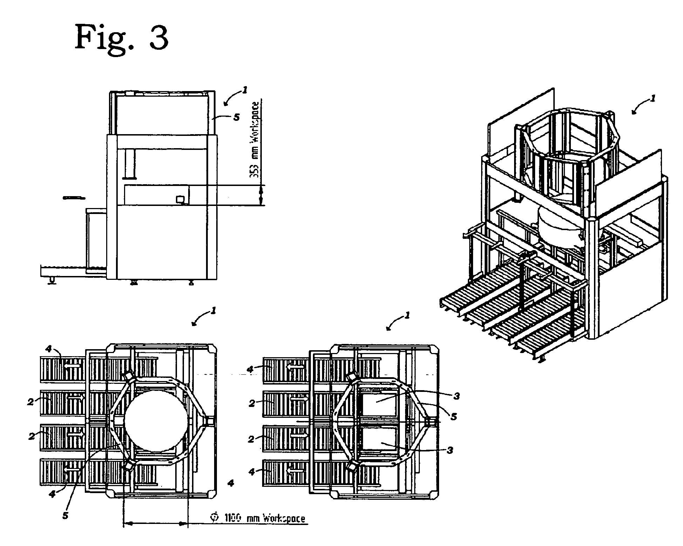

In Fig. 3 sind verschiedene Ansichten einer als Doppelpalettierer ausgebildeten erfindungsgemäßen Palettiervorrichtung 1 dargestellt, wobei die angegebenen Maße nur beispielhaft zu sehen sind. Die erfindungsgemäße Palettiervorrichtung 1 ist mit zwei Zuführungen 2, die beispielhaft mittig angeordnet sind, und zwei Abführungen 4, die beispielhaft am Rand angeordnet sind, ausgestattet. Bevorzugt werden durch die Be- und/oder Entladeeinheit 5 gleichzeitig mindestens zwei Paletten 3 überspannt.

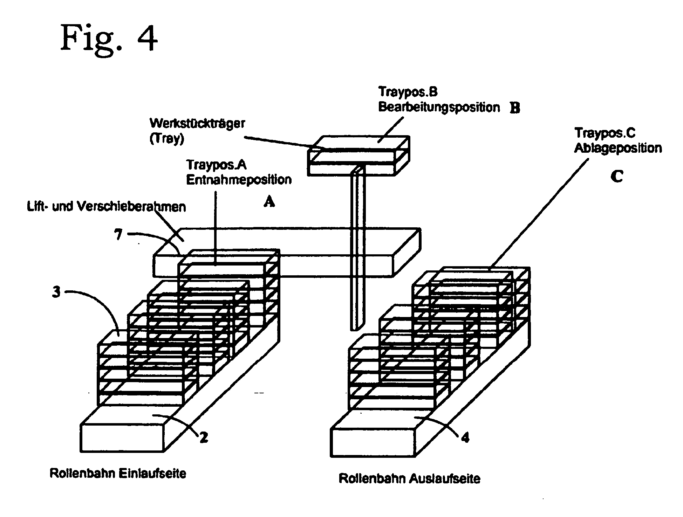

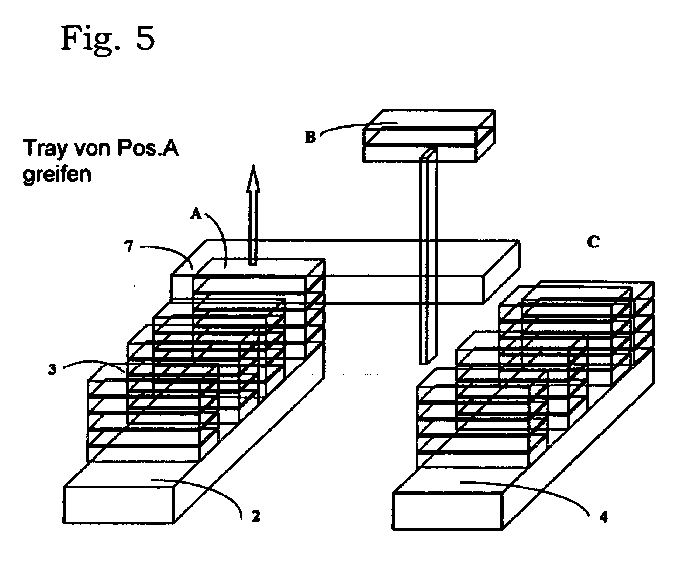

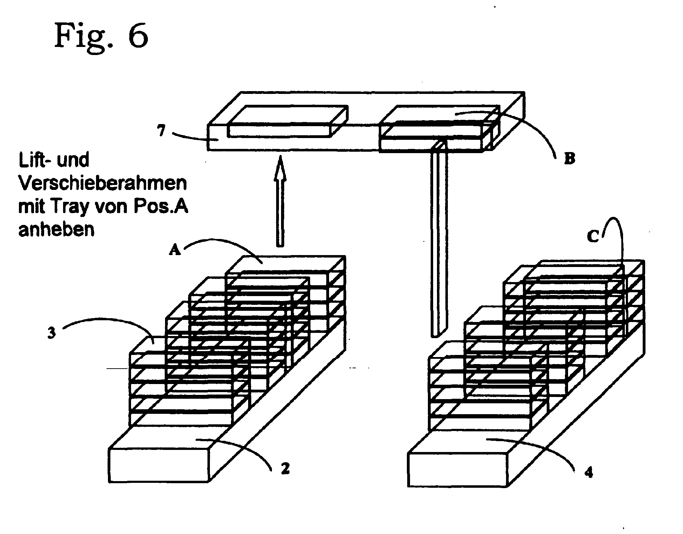

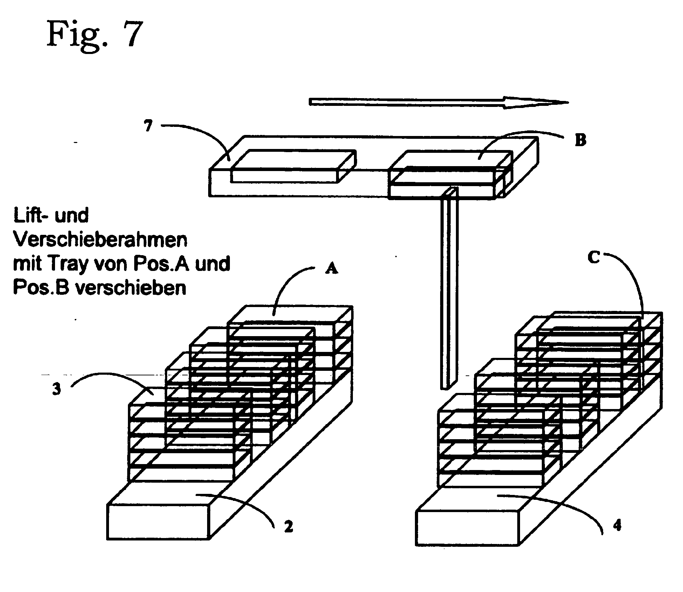

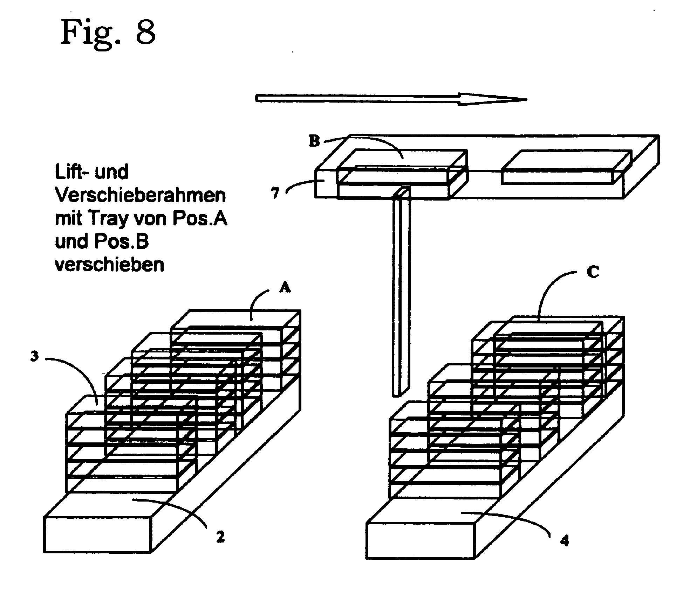

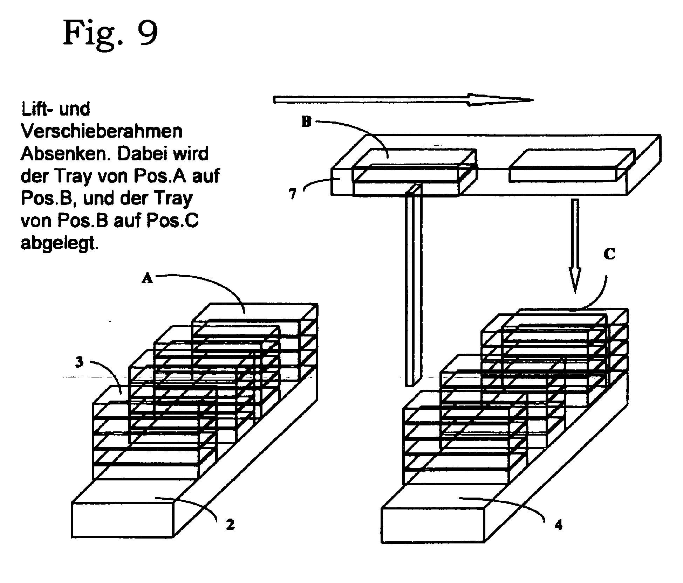

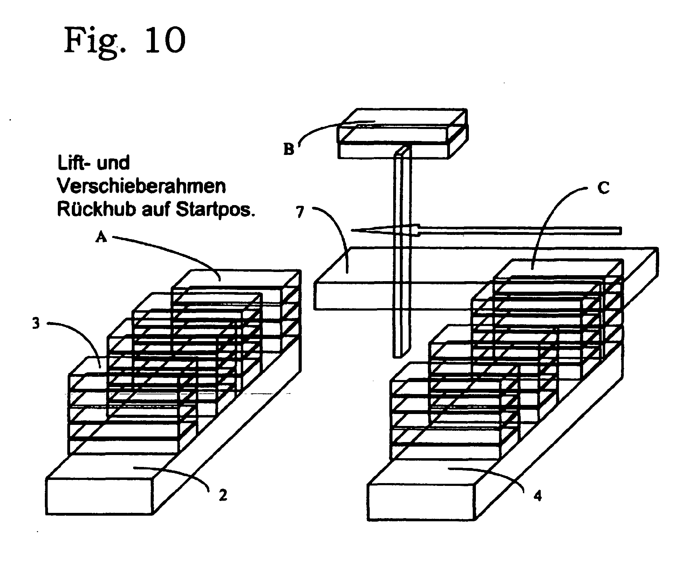

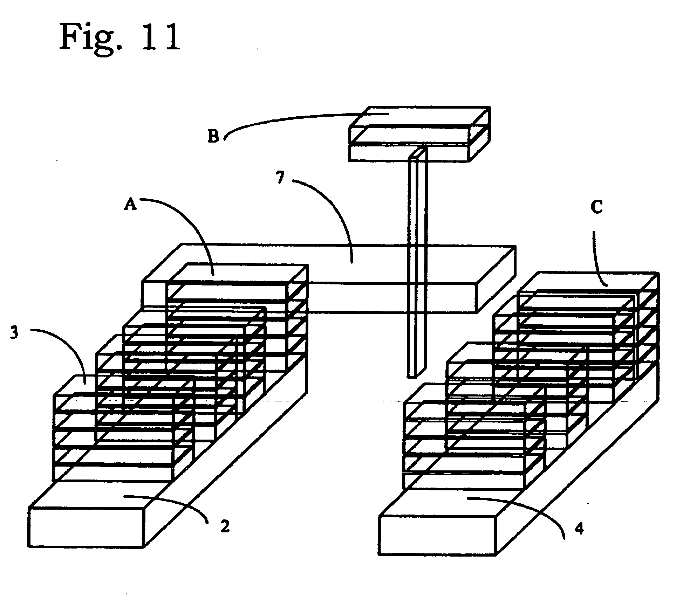

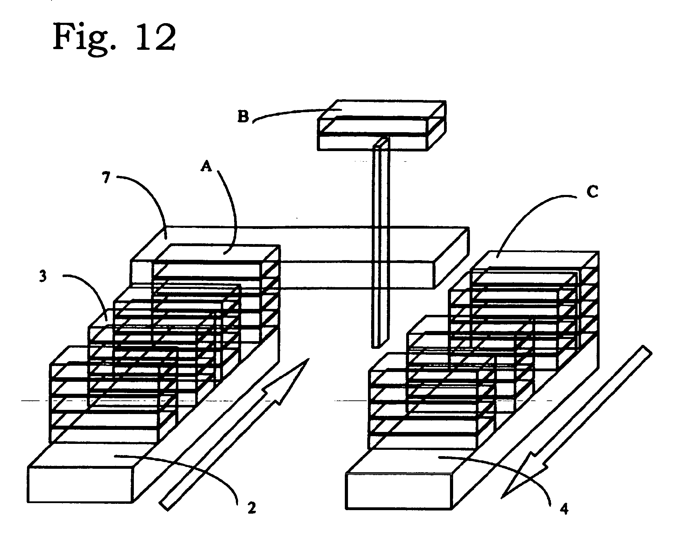

Fig. 4 bis 12 zeigen einen schematischen Ablauf einer Vereinzelungsvorrichtung einer erfindungsgemäßen Palettiervorrichtung gemäß Fig. 2. Die erfindungsgemäße Palettiervorrichtung weist für den zuzuführenden Behälterstapel einen ersten Palettenlift und für den abzuführenden Behälterstapel einen zweiten Palettenlift auf. Mittels einer Vereinzelungsvorrichtung 7, die auch als Lift- und Verschieberahmen die Funktion des ersten und zweiten Palettenliftes übernehmen kann, in Form eines waagerecht bewegbaren Rahmens wird der oberste Behälter des zugeführten Behälterstapels aus der Entnahmeposition A (Traypos. A) von dem Stapel abgehoben horizontal zu einem zwischen den Palettenliften angeordneten Bearbeitungstisch (Bearbeitungsposition B, Traypos. B) gebracht und durch Absenken des Rahmens abgelegt. Durch das Absenken wird der nächste an der Entnahmeposition A befindliche Behälter des zugeführten Behälterstapels ergriffen und anschließend angehoben. Wenn dieser Behälter die Höhe des auf dem Arbeitstisch (Bearbeitungstisch) befindlichen Behälters erreicht hat, wird der zuletzt angehobene Behälter durch den Rahmen horizontal zum Arbeitstisch in die Bearbeitungsposition B befördert und gleichzeitig der bis dahin auf dem Arbeitstisch befindliche Behälter über den abzuführenden Behälterstapel in die Ablageposition C gebracht. Durch Absenkung des Rahmens erfolgt zum einen ein Absetzen des zuletzt gegriffenen Behälters in die Bearbeitungsposition B auf dem Arbeitstisch und zum anderen ein Absetzen des von dem Arbeitstisch beförderten Behälters in die Ablageposition C auf den abzuführenden Behälterstapel. Anschließend wird der Rahmen waagerecht in eine Position gebracht, dass der nun oberste Behälter des zugeführten Behälterstapels von dem Stapel aus der Entnahmeposition A abgehoben werden kann. Wenn dieser Behälter die Höhe des nun auf dem Arbeitstisch in der Bearbeitungsposition B befindlichen Behälters erreicht hat und, spätestens wenn der Be- bzw. Entladevorgang des nun auf dem Arbeitstisch befindlichen Behälters beendet ist, wird der zuletzt angehobene Behälter durch den Rahmen horizontal zum Arbeitstisch in die Bearbeitungsposition B befördert und gleichzeitig der bis dahin auf dem Arbeitstisch befindliche Behälter über den abzuführenden Behälterstapel in die Ablageposition C gebracht. Während der oberste auf dem Zuführstapel in der Entnahmeposition A befindliche Behälter zum Arbeitstisch in die Bearbeitungsposition B befördert wird, während er auf dem Arbeitstisch in der Bearbeitungsposition B verweilt und/oder während er von dem Arbeitstisch zu dem Abführungsstapel in die Ablageposition C transportiert wird, findet sein Be- bzw. Entladevorgang statt. Eventuell könnte der Be- bzw. Entladevorgang auch schon beim Anheben erfolgen bzw. noch beim Absenken durchgeführt werden. Somit ist der Be- bzw. Entladevorgang nicht auf die Zeit in der Bearbeitungsposition B beschränkt. Ist der Be- bzw. Entladevorgang schon abgeschlossen, bevor der Behälter den Abführungsstapel erreicht, so beginnt die Be- und/oder Entladeeinheit mit der Be- bzw. Entladung des nachfolgenden Behälters. Somit ergeben sich keinerlei Wartezeiten, so dass der Be- bzw. Entladevorgang absolut kontinuierlich erfolgt. Bevorzugt befindet sich auch der Rahmen in einer kontinuierlichen Bewegung. Selbstverständlich ist es auch im Rahmen des Erfindungsgedankens denkbar, dass der Rahmen beispielsweise durch einen beidseitig verlaufenden, endlosen Nockenzahnriemen odgl. zum Transport der Paletten ausgestattet ist, solange sicher gestellt ist, dass der Be- bzw. Entladevorgang durch die Be- und/oder Entladeeinheit 5 kontinuierlich und/oder fliegend erfolgt.

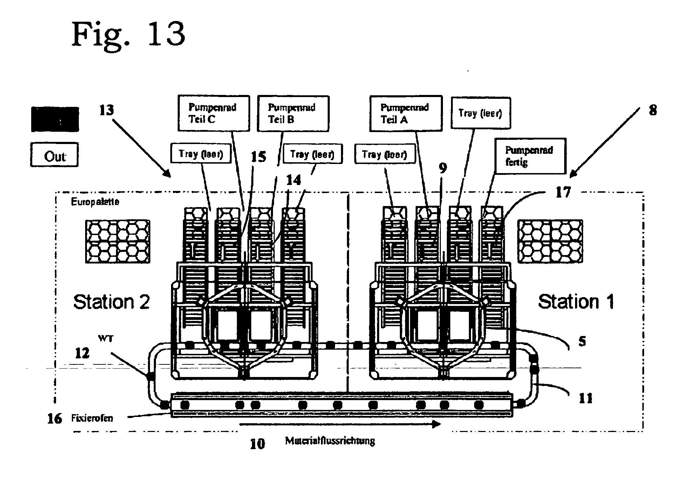

Fig. 13 zeigt ein beispielhaftes, schematisches Ablaufschema von in einen Produktionsablauf integrierten, als Doppelpalettierer ausgebildeten erfindungsgemäßen Palettiervorrichtungen 1. Die erfindungsgemäße Palettiervorrichtung 8 weist eine Zuführung 9 auf, deren Paletten 3 mit Pumpenrad-Teil A bestückt sind. Diese werden durch die Be- und/oder Entladeeinheit 5 auf das sich in Materialflussrichtung 10 bewegende Förderband 11, auf dem sich bevorzugt Werkstückträger 12 befinden, gesetzt. Durch das Förderband 11 verlassen die aufgesetzten Pumpenrad-Teile A die Station 1 und werden zur Station 2 befördert. Die dort befindliche erfindungsgemäße Palettiervorrichtung 13 weist eine Zuführung 14 auf, deren Paletten 3 mit Pumpenrad-Teil B bestückt sind und eine Zuführung 15 auf, deren Paletten 3 mit Pumpenrad-Teil C bestückt sind. Durch die Be- und/oder Entladeeinheit 5 der erfindungsgemäßen Palettiervorrichtung 13 werden die Pumpenrad-Teile B und C auf das sich bewegende Förderband 11 gesetzt (z.B. aufeinander auf Pumpenrad-Teil A). Das Förderband 1 1 verlässt die Station 2 und befördert die aufgesetzten Pumpenrad-Teile in den Fixierofen 16. Von dem Fixierofen 16 gelangen die Pumpenrad-Teile zu der Station 1, wo sie durch dessen Be- und/oder Entladeeinheit 5 vom Förderband 11 genommen und in Paletten gelagert über die Abführung 17 die Station 1 verlassen.

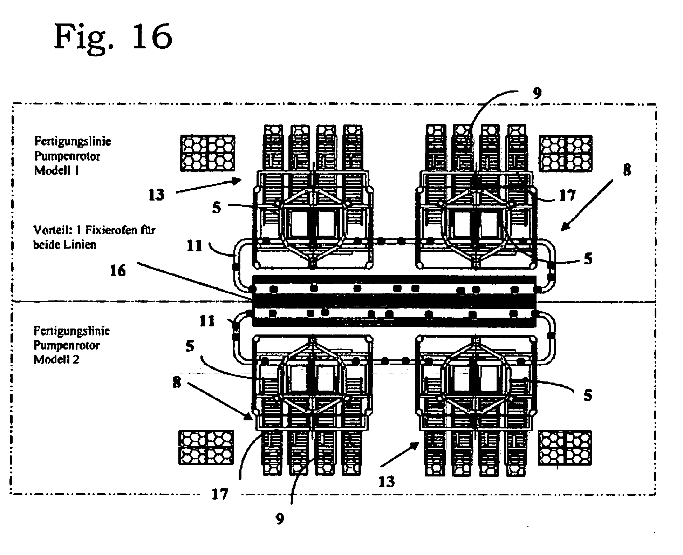

Fig. 16 zeigt ein beispielhaftes, weiteres schematisches Ablaufschema von in einen Produktionsablauf integrierten, als Doppelpalettierer ausgebildeten erfindungsgemäßen Palettiervorrichtungen 1. Hierbei bedienen zwei Förderbänder 11 den Fixierofen 16.

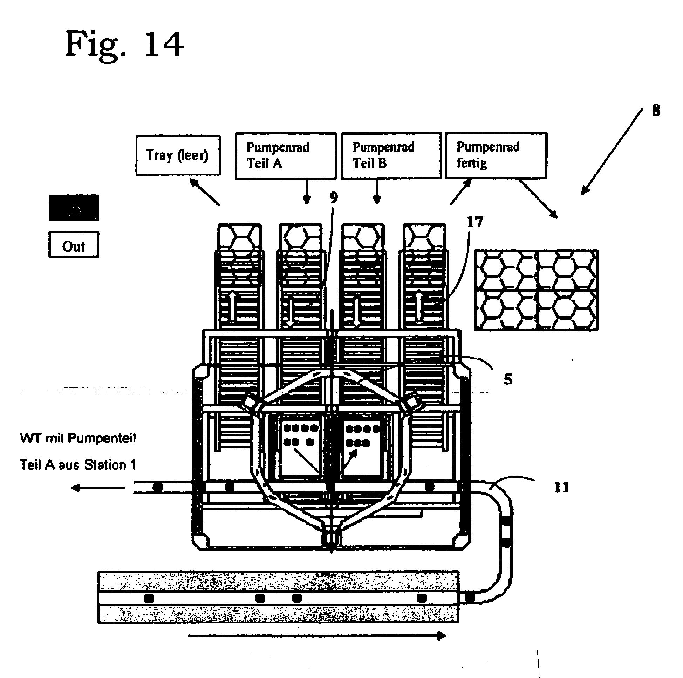

Fig. 14 zeigt Detailansichten der Fig.13 :
1. Der aus dem Klebeofen kommende WT wird mit einer Hubpositioniereinheit ausgehoben und exakt positioniert.
2. Der Pumpenrad wird vom Werkstückträger abgenommen und in die Palette gesetzt.
3. Das Pumpenteil A wird auf dem WT in eine Vorrichtung gesetzt.
4. Der WT wird auf das Bandsystem abgesenkt und läuft aus der Station aus.

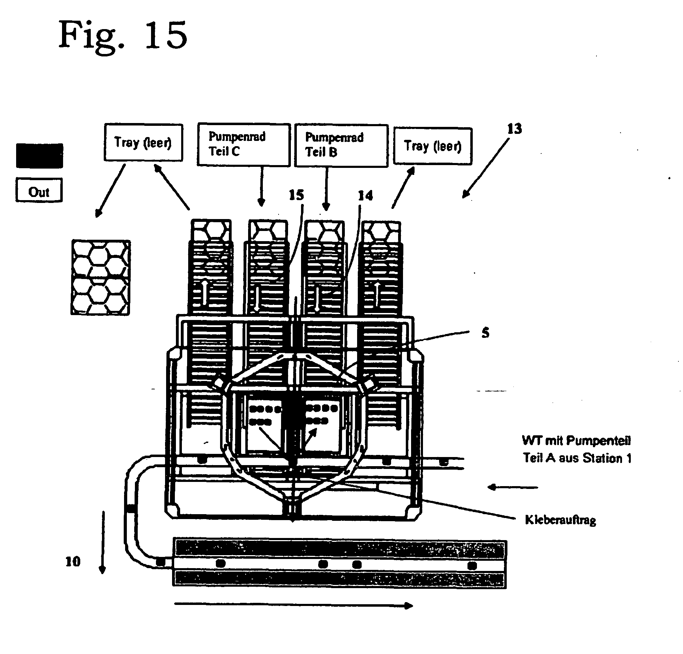

Fig. 15 zeigt Detailansichten der Fig. 13 :
1. Der mit dem Pumpenteil A bereits bestückte WT läuft in die Station ein und wird mit einer Hubpositioniereinheit ausgehoben und exakt positioniert.
2. Das Pumpenteil B wird mit Kleber benetzt und auf dem WT mit dem Pumpenteil A verbunden.
3. Pumpenteil C wird mit Kleber benetzt und mit Pumpenteil A/B verbunden.
4. Der WT wird auf das Bandsystem abgesenkt und läuft aus der Station aus.

Durch die Figuren wird beispielhaft verdeutlicht, dass die erfindungsgemäße Palettiervorrichtung als auch als System bzw. Station für Prozesse, wie z.B. prüfen, montieren (Montagestation), sortieren, dichten, befüllen, bearbeiten (Bearbeitungsstation) und/odgl. einsetzbar ist. Dadurch wird schnellstes Handling der Be- und/oder Entladeeinheit, die eine Parallel-Kinematik, Robotik, einen Linearschlitten odgl. aufweist, mit höchster Präzision vereint. Durch intelligente Vernetzung aller automatisierbaren Teilprozesse und konsequente Ausnutzung der dadurch freiwerdenden Potentiale, können Grenzen für Prozessparameter wie Taktzeit, Produktivität und Flexibilität usw. signifikant erweitert werden.

### Bezugszahlenliste:

- 1: Palettierungsvorrichtung
- 2: Zuführung
- 3: Palette bzw. Palettenstapel
- 4: Abführung
- 5: Be- und/oder Entladeeinheit
- 6: Steuerungsgerät
- 7: Vereinzelungsvorrichtung
- 8: Palettierungsvorrichtung
- 9: Zuführung
- 10: Materialflussrichtung
- 11: Förderband
- 12: Werkstückträger
- 13: Palettierungsvorrichtung
- 14: Zuführung
- 15: Zuführung
- 16: Fixierofen
- 17: Abführung

- A: Entnahmeposition
- B: Bearbeitungsposition
- C: Ablageposition

## Patentansprüche

1. Palettiervorrichtung (1),
- mit einer Einrichtung zum Zu- und/oder Abführen von Paletten (3), Werkstücken, Trays, Blister, Kleinlasttransportbehältern odgl. und
- mit einer Einheit zum Be- und/oder Entladen, wobei
die Einrichtung zum Zu- und/oder Abführen von Paletten (3), Werkstücken, Trays, Blister, Kleinlasttransportbehältern odgl. mindestens eine Beschickungsvorrichtung aufweist, wobei die Beschickungsvorrichtung eine Zuführung (2, 14, 15) und eine Abführung (4, 17) aufweist, und wobei
zwischen der eine Entnahmeposition (A) aufweisenden Zuführung (2, 14, 15) und der eine Ablageposition (C) aufweisenden Abführung (4, 17) eine Vereinzelungseinrichtung (7) angeordnet ist, durch die eine Palette (3), Werkstück, Tray, Blister, Kleinlasttransportbehälter odgl. von der Entnahmeposition (A) der Zuführung (2, 14, 15) über eine Bearbeitungsposition (B) zu der Ablageposition (C) der Abführung (4, 17) bewegbar ist,
**dadurch gekennzeichnet,**
**dass** die Be- und/oder Entladeeinheit (5) mindestens eine Parallel-Kinematik, Robotik, einen Linearschlitten odgl. aufweist, und dass die Palette (3), das Werkstück, der Tray, der Blister, der Kleinlasttransportbehälter odgl. durch die Be- und/oder Entladeeinheit (5) in der Bearbeitungsposition (B) und während der Beförderung aus der Entnahmeposition (A) zur Bearbeitungsposition (B) und/oder während der Beförderung von der Bearbeitungsposition (B) zur Ablageposition (C) beladbar bzw. entladbar ist.

2. Palettiervorrichtung (1), nach Anspruch 1,
**dadurch gekennzeichnet,**
**dass** die Be- und/oder Entladeeinheit (5) ein Tripod, Hexapod oder eine Neos-Kinematik ist.

3. Palettiervorrichtung (1), nach Anspruch 1 oder 2,
**dadurch gekennzeichnet,**
**dass** die Zuführung (2, 14, 15) und/oder Abführung (4, 17) eine Rollenbahn, ein Transportwagen, ein Bodenroller odgl. ist.

4. Palettiervorrichtung (1), nach einem der vorhergehenden Ansprüche,
**dadurch gekennzeichnet,**
**dass** die Palettiervorrichtung (1) ein Einfach-, Doppel- oder Mehrfachpalettierer ist.

5. Palettiervorrichtung (1), nach einem der vorhergehenden Ansprüche,
**dadurch gekennzeichnet,**
**dass** die Palettiervorrichtung (1) eine zum Auf- bzw. Abstapeln genutzte Vereinzelungseinrichtung (7) aufweist.

6. Palettiervorrichtung (1), nach einem der vorhergehenden Ansprüche,
**dadurch gekennzeichnet,**
**dass** jeder Zuführung (2, 14, 15) ein erster Palettenlift und jeder Abführung (4, 17) ein zweiter Palettenlift zugeordnet ist.

7. Palettiervorrichtung (1), nach Anspruch 6,
**dadurch gekennzeichnet,**
**dass** der erste und der zweite Palettenlift voneinander beabstandet angeordnet sind, wobei der Abstand mindestens eine Palettenbreite beträgt.

8. Verfahren zum Be- und/oder Entladen von Paletten (3), Werkstücken, Trays, Blister, Kleinlasttransportbehältern odgl. mittels einer Palettiervorrichtung (1), wobei die Palettiervorrichtung (1) mindestens eine Zuführung (2, 14, 15) und mindestens eine Abführung (4, 17) aufweist und wobei eine Vereinzelungseinrichtung (7) Anwendung findet, die die zugeführten und zum Be- oder Entladen vorgesehenen Paletten (3), Werkstücke, Trays, Blister, Kleinlasttransportbehältern odgl. vereinzelt, um diese anschließend durch Einsatz einer Be- und/oder Entladeeinheit (5) zu be- und/oder entladen, wobei
die Vereinzelungseinrichtung (7) zwischen der eine Entnahmeposition (A) aufweisenden Zuführung (2, 14, 15) und der eine Ablageposition (C) aufweisenden Abführung (4, 17) angeordnet ist, so dass die zugeführte Palette (3), das zugeführte Werkstück, der zugeführte Tray, der zugeführte Blister, der zugeführte Kleinlasttransportbehältern odgl. von der Entnahmeposition (A) der Zuführung (2, 14, 15) über eine Bearbeitungsposition (B) zu der Ablageposition (C) der Abführung (4, 17) transportierbar ist,
**dadurch gekennzeichnet,**
**dass** für das Be- und/oder Entladen eine Parallel-Kinematik, Robotik, ein Linearschlitten odgl. eingesetzt wird und dass die zugeführte Palette (3), das zugeführte Werkstück, den zugeführten Tray, den zugeführten Blister, der zugeführte Kleinlasttransportbehältern odgl. durch die Be- und/oder Entladeeinheit (5) in der Bearbeitungsposition (B) und während der Beförderung aus der Entnahmeposition (A) zur Bearbeitungsposition (B) und/oder während der Beförderung von der Bearbeitungsposition (B) zur Ablageposition (C) beladbar bzw. entladbar ist.

9. Verfahren, nach Anspruch 8,
**dadurch gekennzeichnet,**
**dass** die Parallel-Kinematik, Robotik, der Linearschlitten odgl. ein kontinuierliches Be- und/oder Entladen ermöglicht.

10. Verfahren, nach einem der Ansprüche 8 oder 9,
**dadurch gekennzeichnet,**
**dass** die Vereinzelungseinrichtung (7) nahezu kontinuierlich in Bewegung ist.

11. Verfahren, nach einem der Ansprüche 8 bis 10,
**dadurch gekennzeichnet,**
**dass** die Parallel-Kinematik, Robotik odgl. ein kontinuierliches und/oder fliegendes Be- und/oder Entladen ermöglicht.

12. Verfahren, nach einem der Ansprüche 8 bis 11,
**dadurch gekennzeichnet,**
**dass** als Palettiervorrichtung (1) eine Palettiervorrichtung (1) nach einem der Ansprüche 1 bis 7 eingesetzt wird.

13. Verfahren zum Bearbeiten, Montieren odgl. von Werkstücken, **dadurch gekennzeichnet,**
**dass** als Montage- und/oder Bearbeitungsstation mindestens eine Palettiervorrichtung (1) eingesetzt wird, die mit einer Einrichtung zum Zu- und/oder Abführen von Paletten (3), Werkstücken, Trays, Blister, Kleinlasttransportbehältern odgl. und mit einer Einheit zum Be- und/oder Entladen ausgestattet ist, wobei die Be- und/oder Entladeeinheit (5) mindestens eine Parallel-Kinematik, Robotik, einen Linearschlitten odgl. aufweist und wobei die Einrichtung zum Zu- und/oder Abführen von Paletten (3), Werkstücken, Trays, Blister, Kleinlasttransportbehältern odgl. mindestens eine eine Zuführung (2, 14, 15) und eine Abführung (4, 17) aufweisende Beschickungsvorrichtung aufweist und zwischen der eine Entnahmeposition (A) aufweisenden Zuführung (2, 14, 15) und der eine Ablageposition (C) aufweisenden Abführung (4, 17) eine Vereinzelungseinrichtung (7) angeordnet ist, durch die eine Palette (3), Werkstück, Tray, Blister, Kleinlasttransportbehälter odgl. von der Entnahmeposition (A) der Zuführung (2, 14, 15) über eine Bearbeitungsposition (B) zu der Ablageposition (C) der Abführung (4, 17) bewegbar ist, wobei die Palette (3), das Werkstück, der Tray, der Blister, der Kleinlasttransportbehältern odgl. durch die Be- und/oder Entladeeinheit (5) in der Bearbeitungsposition (B) und während der Beförderung aus der Entnahmeposition (A) zur Bearbeitungsposition (B) und/oder während der Beförderung von der Bearbeitungsposition (B) zur Ablageposition (C) beladbar bzw. entladbar ist.

14. Verfahren, nach Anspruch 13,
**dadurch gekennzeichnet,**
**dass** als Palettiervorrichtung (1) eine Palettiervorrichtung (1) nach einem der Ansprüche 1 bis 7 eingesetzt wird.

## Claims

1. A palletizing device (1),
h aving a device for supplying and/or conveying away pallets (3), workpieces, trays, blister packs, small-load transport containers or the like, and
h aving a unit for loading and/or unloading, wherein the device for supplying and/or conveying away pallets (3), workpieces, trays, blister packs, small-load transport containers or the like has at least one feeding device, said feeding device having an inlet (2, 14, 15) and an outlet (4, 17), and in which a separating device (7) is arranged between the inlet (2, 14, 15) having a removal position (A) and the outlet (4, 17) having a storage position (C), by means of which a pallet (3), workpiece, tray, blister pack, small-load transport container or the like can be moved from the removal position (A) of the inlet (2, 14, 15) via a processing position (B) to the storage position (C) of the outlet (4, 17),
**characterized in that**
the loading and/or unloading unit (5) has at least one parallel kinematic unit, robotics, a linear carriage or the like, and
the pallet (3), workpiece, tray, blister pack, small-load transport container or the like can be loaded or unloaded by means of the loading and/or unloading unit (5) in the processing position (B) and during conveyance from the removal position (A) to the processing position (B) and/or during conveyance from the processing position (B) to the storage position (C).

2. The palletizing device (1) according to claim 1,
**characterized in that**
the loading and/or unloading unit (5) is a tripod, a hexapod or a Neos kinematic unit.

3. The palletizing device (1), according to claim 1 or 2,
**characterized in that**
the inlet (2, 14, 15) and/or outlet (4, 17) is a conveyor belt, a transport wagon, a floor roller or the like.

4. The palletizing device (1), according to one of the preceding claims,
**characterized in that**
the palletizing device (1) is a single, double or multiple palletizer.

5. The palletizing device (1), according to one of the preceding claims,
**characterized in that**
the palletizing device (1) has a separating device (7) used for stacking or de-stacking.

6. The palletizing device (1), according to one of the preceding claims,
**characterized in that**
each inlet (2, 14, 15) is assigned a first pallet lift and each outlet (4, 17) is assigned a second pallet lift.

7. The palletizing device (1), according to claim 6,
**characterized in that**
the first and the second pallet lift are spaced apart from each other, wherein the distance is at least equal to one pallet width.

8. A method for loading and/or unloading pallets (3), workpieces, trays, blister packs, small-load transport containers or the like by means of a palletizing device (1), said palletizing device (1) having at least one inlet (2, 14, 15) and at least one outlet (4, 17) and in which a separating device (7) is used which separates the supplied pallets (3), workpieces, trays, blister packs, small-load transport containers or the like which are provided for loading and/or unloading in order to subsequently load and/or unload them by the use of a loading and/or unloading unit (5), the separating device (7) being arranged between the inlet (2, 14, 15) having a removal position (A) and the outlet (4, 17) having a storage position (C), so that the supplied pallet (3), the supplied workpiece, the supplied tray, the supplied blister pack, the supplied small-load transport container or the like is transportable from the removal position (A) of the inlet (2, 14, 15) via a processing position (B) to the storage position (C) of the outlet (4, 17),
**characterized in that**
a parallel kinematic unit, a robotics, a linear carriage or the like is used for the loading and/or unloading, and that the supplied pallet (3), the supplied tray, the supplied blister pack, the supplied small-load transport container or the like can be loaded or unloaded by the loading and/or unloading unit (5) in the processing position (B) and during conveyance from the removal position (A) to the processing position (B) and/or during conveyance from the processing position (B) to the storage position (C).

9. The method according to claim 8,
**characterized in that**
the parallel kinematic unit, robotics, linear carriage or the like facilitates a continuous loading and/or unloading.

10. The lighting device according to one of claims 8 or 9,
**characterized in that**
the separating device (7) is in motion almost continuously.

11. The method according to one of claims 8 to 10,
**characterized in that**
the parallel kinematic unit, robotics or the like facilitates a continuous and/or on-the-fly loading and/or unloading process.

12. The method according to one of claims 8 to 11,
**characterized in that**
a palletizing device (1) according to one of Claims 1 to 7 is used as the palletizing device (1).

13. A method for the processing, assembly or the like of workpieces,
**characterized in that**,
as the assembly and/or processing station at least one palletizing device (1) is used which is equipped with a device for supplying and/or conveying away pallets (3), workpieces, trays, blister packs, small-load transport containers or the like, and with a unit for loading and/or unloading, wherein the loading and/or unloading unit (5) has at least one parallel kinematic unit, a robotics, a linear carriage or the like and the device for supplying and/or conveying away pallets (3), workpieces, trays, blister packs, small-load transport containers or the like has at least one feeding device having an inlet (2, 14, 15) and an outlet (4, 17), and a separating device (7) is arranged between the inlet (2, 14, 15) having a removal position (A) and the outlet (4, 17) having a storage position (C), by means of which a pallet (3), tray, blister pack, small-load transport container or the like can be moved from the removal position (A) of the inlet (2, 14, 15) via a processing position (B) to the storage position (C) of the outlet (4, 17), wherein the pallet (3), the workpiece, tray, blister pack, small-load transport container or the like can be loaded or unloaded by the loading and/or unloading unit (5) in the processing position (B) and during conveyance from the removal position (A) to the processing position (B) and/or during conveyance from the processing position (B) to the storage position (C).

14. The method according to claim 13,
**characterized in that**
a palletizing device (1) according to one of Claims 1 to 7 is used as the palletizing device (1).

## Revendications

1. Dispositif de palettisation (1), comprenant
u n dispositif d'arrivée et/ou d'évacuation de palettes (3), pièces, plateaux, coques, conteneurs de transport de petite charge ou similaires, et
u ne unité de chargement et/ou de déchargement, le dispositif d'arrivée et/ou d'évacuation de palettes (3), pièces, plateaux, coques, conteneurs de transport de petite charge ou similaires présentant au moins un dispositif d'alimentation, le dispositif d'alimentation présentant une arrivée (2, 14, 15) et une évacuation (4, 17), et un dispositif de séparation (7) étant disposé entre l'arrivée (2, 14, 15) présentant une position de prélèvement (A) et l'évacuation (4, 17) présentant une position de dépose (C), dispositif de séparation par lequel une palette (3), une pièce, un plateau, une coque, un conteneur de transport de petite charge ou similaire peut être déplacé de la position de prélèvement (A) de l'arrivée (2, 14, 15) au moyen d'une position de traitement (B) à la position de dépose (C) de l'évacuation (4, 17),
**caractérisé en ce que**
l'unité de chargement et/ou de déchargement (5) présente au moins une cinématique parallèle, une robotique, un chariot linéaire ou similaire, et
**en ce que** la palette (3), la pièce, le plateau, la coque, le conteneur de transport de petite charge ou similaire peut être chargé ou déchargé par l'unité de chargement et/ou de déchargement (5) dans la position de traitement (B) et pendant le transport de la position de prélèvement (A) à la position de traitement (B) et/ou pendant le transport de la position de traitement (B) à la position de dépose (C).

2. Dispositif de palettisation (1) selon la revendication 1,
**caractérisé en ce que**
l'unité de chargement et/ou de déchargement (5) est un tripode, un hexapode ou une cinématique de Neos.

3. Dispositif de palettisation (1) selon la revendication 1 ou 2,
**caractérisé en ce que**
l'arrivée (2, 14, 15) et/ou l'évacuation (4, 17) est un convoyeur à rouleaux, un chariot transporteur, transporteur à galets au sol ou similaire.

4. Dispositif de palettisation (1) selon l'une quelconque des revendications précédentes,
**caractérisé en ce que**
le dispositif de palettisation (1) est une palettiseuse simple, double ou multiple.

5. Dispositif de palettisation (1) selon l'une quelconque des revendications précédentes,
**caractérisé en ce que**
le dispositif de palettisation (1) présente un dispositif de séparation (7) utilisé pour l'empilement ou le désempilement.

6. Dispositif de palettisation (1) selon l'une quelconque des revendications précédentes,
**caractérisé en ce**
**qu'**un premier élévateur de palettes est attribué à chaque arrivée (2, 14, 15) et un second élévateur de palettes à chaque évacuation (4, 17).

7. Dispositif de palettisation (1) selon la revendication 6,
**caractérisé en ce que**
le premier et le second élévateur de palettes sont disposés à distance l'un de l'autre, la distance étant au moins une largeur de palette.

8. Procédé de chargement et/ou de déchargement de palettes (3), pièces, plateaux, coques, conteneurs de transport de petite charge ou similaires au moyen d'un dispositif de palettisation (1), le dispositif de palettisation (1) présentant au moins une arrivée (2, 14, 15) et au moins une évacuation (4, 17), et un dispositif de séparation (7) étant utilisé, lequel sépare les palettes (3), pièces, plateaux, coques, conteneurs de transport de petite charge, arrivés et prévus pour le chargement ou le déchargement, afin de les charger et/ou de les décharger ensuite en utilisant une unité de chargement et/ou de déchargement (5), le dispositif de séparation (7) étant disposé entre l'arrivée (2, 14, 15) présentant une position de prélèvement (A) et l'évacuation (4, 17) présentant une position de dépose (C), de sorte que la palette (3) amenée, la pièce amenée, le plateau amené, la coque amenée, le conteneur de transport de petite charge amené ou similaire peut être transporté de la position de prélèvement (A) de l'arrivée (2, 14, 15) au moyen d'une position de traitement (B) à la position de dépose (C) de l'évacuation (4, 17),
**caractérisé en ce**
**qu'**une cinématique parallèle, une robotique, un chariot linéaire ou similaire est utilisé pour le chargement et/ou le déchargement et en ce que la palette (3) amenée, la pièce amenée, le plateau amené, la coque amenée, le conteneur de transport de petite charge amené ou similaire peut être chargé et/ou déchargé par l'unité de chargement et/ou de déchargement (5) dans la position de traitement (B) et pendant le transport de la position de prélèvement (A) à la position de traitement (B) et/ou pendant le transport de la position de traitement (B) à la position de dépose (C).

9. Procédé selon la revendication 8,
**caractérisé en ce que**
la cinématique parallèle, la robotique, le chariot linéaire ou similaire permet un chargement et/ou un déchargement continu.

10. Procédé selon l'une quelconque des revendications 8 ou 9,
**caractérisé en ce que**
le dispositif de séparation (7) est en mouvement pratiquement de façon continue.

11. Procédé selon l'une quelconque des revendications 8 à 10,
**caractérisé en ce que**
la cinématique parallèle, la robotique ou similaire permet un chargement et/ou un déchargement continu et/ou mobile.

12. Procédé selon l'une quelconque des revendications 8 à 11,
**caractérisé en ce**
**qu'**on utilise un dispositif de palettisation (1) selon l'une quelconque des revendications 1 à 7 comme dispositif de palettisation (1).

13. Procédé pour le traitement, le montage ou similaire de pièces,
**caractérisé en ce**
**qu**'on utilise comme station de montage et/ou de traitement au moins un dispositif de palettisation (1), qui est équipé d'un système pour l'arrivée et/ou l'évacuation de palettes (3), pièces, plateaux, coques, conteneurs de transport de petite charge ou similaires et d'une unité pour le chargement et/ou le déchargement, l'unité de chargement et/ou de déchargement (5) présentant au moins une cinématique parallèle, une robotique, un chariot linéaire ou similaire et le dispositif d'arrivée et/ou d'évacuation de palettes (3), pièces, plateaux, coques, conteneurs de transport de petite charge ou similaires présentant au moins un dispositif d'alimentation présentant une arrivée (2, 14, 15) et une évacuation (4, 17) et un dispositif de séparation (7) étant disposé entre l'arrivée (2, 14, 15) présentant une position de prélèvement (A) et l'évacuation (4, 17) présentant une position de dépose (C), dispositif de séparation par lequel une palette (3), une pièce, un plateau, une coque, un conteneur de transport de petite charge ou similaire peut être déplacé de la position de prélèvement (A) de l'arrivée (2, 14, 15) par l'intermédiaire d'une position de traitement (B) à la position de dépose (C) de l'évacuation (4, 17), la palette (3), la pièce, le plateau, la coque, le conteneur de transport de petite charge ou similaire pouvant être chargé ou déchargé par l'unité de chargement et/ou de déchargement (5) dans la position de traitement (B) et pendant le transport de la position de prélèvement (A) à la position de traitement (B) et/ou pendant le transport de la position de traitement (B) à la position de dépose (C).

14. Procédé selon la revendication 13,
**caractérisé en ce**
**qu**'un dispositif de palettisation (1) selon l'une quelconque des revendications 1 à 7 est utilisé comme dispositif de palettisation (1).
